# EUROPÄISCHE PATENTSCHRIFT

(11) **EP 1 462 497 B1**
(45) Veröffentlichungstag und Bekanntmachung des Hinweises auf die Patenterteilung: **02.08.2006**
(21) Anmeldenummer: 04006177.2
(22) Anmeldetag: 16.03.2004
(51) Int. Cl.: C09J 5/06

(54) **Verfahren zum kontaminationstoleranten Kleben von Fügeteilen**
Process for contamination tolerant adhesion of parts to be joined
Procédé d'adhésion de pièce d'assemblage où l'adhésif est tolérant aux contaminations

(30) Priorität: 22.03.2003 DE 10312815
(43) Veröffentlichungstag der Anmeldung: 29.09.2004
(73) Patentinhaber: Henkel Kommanditgesellschaft auf Aktien, 40589 Düsseldorf (DE)
(72) Erfinder: Schenkel, Hubert, 69207 Sandhausen (DE); Von Czarnecki, Jürgen, 85459 Berglern (DE); Boelingen, Matthias, 85435 Erding (DE)

(56) Entgegenhaltungen:
- DE-A- 4 441 656
- DE-A- 10 017 784
- DE-A- 19 845 607
- US-A- 6 004 425
- US-A1- 2004 003 883

## Beschreibung

Die Erfindung betrifft ein Verfahren zum Kleben kontaminierten Fügeteilen, insbesondere zum Kleben von kontaminierten Fügeteilen mit reaktiven Klebstoffen.

Bei den modernen Fertigungsmethoden zum Verbinden von metallischen Komponenten im Maschinen-, Fahrzeug- oder Gerätebau, insbesondere im Automobilbau, werden die klassischen Befestigungsmethoden, wie Nieten, Schrauben oder Schweißen immer häufiger durch das Kleben ersetzt. Das Interesse am Kleben ergibt sich aus verschieden Vorteilen der Klebtechnik im Bereich Leichtbau und der Möglichkeit die unterschiedlichsten Werkstoffe miteinander verbinden zu können.

In der Automobilfertigung werden aus fertigungstechnischen Gründen immer häufiger die Klebstoffe, insbesondere auch die hochfesten Strukturklebstoffe, im sogenannten Rohbau eingesetzt, das heißt, diese Klebstoffe werden häufig auf die ungereinigte Metalloberfläche appliziert. Diese Oberflächen sind dabei in der Regel mit den verschiedensten Korrosionsschutz- oder Ziehfetten oder -ölen beschichtet. Im modernen Leichtbau werden weiterhin nicht nur metallische Substrate, sondern auch Kunststoffmodule eingesetzt, die mit metallischen Bauteilen geklebt werden müssen. Diese Kunststoffteile enthalten häufig an der Oberfläche Trennmittel. Ähnlich Schwierigkeiten mit Oberflächenverunreinigungen sind auch für den gesamten Reparaturbereich typisch. Diese oberflächlich auf den zu verklebenden Substraten vorhandenen Kontaminationen sind durchweg unpolare Verbindungen mit geringer kohäsiver Festigkeit, so dass diese haftungsmindernden Einfluss auf den geklebten Verbund, insbesondere nach Alterungen ausüben können.

Die Festigkeit und die Alterungsbeständigkeit einer geklebten Fügeverbindung werden nicht nur durch die Festigkeit und Alterungsbeständigkeit der Klebstoffmatrix per se beeinflusst, sondern zum entscheidenden Teil durch die Adhäsion in der Grenzschicht zwischen Klebstoff und Fügeteil.
Die Ausbildung einer dauerhaften Haftung des Klebstoffes an der Substratoberfläche ist davon abhängig, dass die funktionellen Gruppen des Klebstoffs und der Fügeteiloberfläche miteinander eine dauerhafte Bindung eingehen können oder miteinander in starke Wechselwirkung treten können. Bereits Kontaminationen in Form von Monolagen-Adsorbaten auf der Fügeteiloberfläche können die kraftschlüssige Wechselwirkung am lasttragenden Fügeteil stören oder vermindern und somit zum Adhäsionsversagen und zu schlechtem Alterungsverhalten der Klebeverbindung führen. Das gilt insbesondere für raumtemperaturhärtende zweikomponentige Klebstoffe.

Um hochfeste, dauerhafte und zuverlässig gegen Alterungseinfluss geschützte Klebeverbindungen erzeugen zu können, werden im bekannten Stand der Technik häufig sehr aufwendige Reinigungs- und Oberflächenvorbehandlungsverfahren benutzt. Beispielsweise werden die Bauteile mit Hilfe von organischen Lösungsmitteln oder wässrigen Reinigungs- und Entfettungsmitteln vorbehandelt. Dies kann entweder durch Spritz- oder Sprühapplikationen oder in Tauchbädern erfolgen, gelegentlich werden diese Reinigungsvorgänge durch Einsatz von Ultraschallbädern unterstützt. Weiterhin ist es üblich, die Oberflächen mit Hilfe von zusätzlichen physikalischen und chemischen Vorbehandlungen für eine Klebung vorzubereiten. Physikalische Vorbehandlungsverfahren sind Schleifen und Strahlen mit abrasiven Mitteln (z.B. Sandstrahlen, Kryostrahlen). Als chemische Verfahren werden Plasma-, Beiz- und Anodisiervorbehandlungen eingesetzt. Alle Vorbehandlungsverfahren beinhalten aber das Risiko, dass haftungsmindernde Kontaminationen auf den Fügeteiloberflächen verbleiben.
Da derartig aufwendige Verfahren sehr kostenintensiv sind, werden sie beispielsweise im Maschinenbau oder in der Automobilfertigung oder bei übrigen Land- und Seefahrzeugbauten kaum eingesetzt. Selbst bei den Klebeverfahren in der Luft- und Raumfahrt, wo ein derartiger Aufwand zur Reinigung und Oberflächenvorbehandlung getrieben wird, ist die Störanfälligkeit durch unkontrolliert auf den Substratoberflächen verbleibende haftungsmindernde Kontaminationen ungelöst. In der Praxis beschreitet man daher bis heute zwei verschiedene Wege, die beide nicht voll befriedigend sind:
- Wo es zwingend erforderlich ist, und wo der Kostendruck für die Fertigungsschritte nicht prohibitiv wirkt, wie z.B. in der Luft- und in der Raumfahrtindustrie, werden aufwendige Reinigungs- und Oberflächenvorbehandlungsverfahren zur Herstellung einer definierten und nach Möglichkeit kontaminationsfreien bzw. kontaminationsarmen Substratoberfläche angewendet.
- In der unter stärkerem Kostendruck stehenden und viel höhere Stückzahlen produzierenden Automobilindustrie versucht man das Problem durch den Einsatz von kontaminationstoleranten Klebstoff-Zusammensetzungen zu lösen. Solche Klebstoff sind in der Regel bei +150°C bis +180°C heißhärtend und können durch die bei diesen Temperaturen viel höhere Diffusionsrate Kontaminationen in den Klebstoff aufnehmen.

Insbesondere für hitzehärtende Klebstoff-Zusammensetzungen auf Basis von reaktiven Kautschuken ist letzteres zu einem erhebliche Umfang bereits gelungen, derartige kautschukbasierte hitzehärtbare Klebstoff-Zusammensetzungen sind zum Beispiel in den nachfolgenden Schriften beschrieben: WO 99/03946, WO 96/16136,WO 96/23040, EP 363892, EP 369165, EP 365715.

Beispiele für kontaminationstolerante hitzehärtende Epoxidklebstoffe sind in den folgenden Schriften offenbart: WO 01/94492, WO 00/37554, WO 00/20483, WO 93/00381, EP 354498.

Derartige warm aushärtende Klebestoffe sind in der Lage, auch geölte Bleche mit einem Ölbelag von bis zu 3 g/m² Öl zu kleben. Die Kontaminationstoleranz wird dabei neben der Klebstoffrezeptur durch die bei der hohen Aushärtetemperatur von 150 °C bis 180 °C ermöglichte Diffusion von unpolaren Kontaminationsbestandteilen in den Klebstoff hinein ermöglicht. Die Zusammensetzung der Klebstoffe erlaubt dabei in begrenztem Umfang das zeitliche Fenster zu beeinflussen, in dem nach der Wärmebeaufschlagung auch Diffusion der Kontaminationsstoffe von der Grenzfläche in die Klebstoffmatrix möglich ist. Sobald der Härtungsprozess des Klebstoffes weiter fortgeschritten ist, ist eine derartige Diffusion des Kontaminationsmaterials in die Klebstoffmatrix hinein aber sehr stark behindert bzw. vollständig unterbunden. Für die überwiegende Anzahl der kalt aushärtenden Klebstoffe, die in der Regel zweikomponentige oder einkomponentige feuchtigkeitshärtende Systeme sind, ist diese Form der Kontaminationstoleranz der Klebstoffzusammensetzung nicht nutzbar, da der Diffusionsprozess bei Raumtemperatur noch keinen signifikanten Beitrag zum Entfernen der Kontaminationsprodukte von der Grenzfläche liefern kann. Diese Hemmung des Diffusionsprozesses ist hierbei besonders ausgeprägt, weil z.B. zweikomponentige Klebstoffsysteme in der Regel so eingestellt sind, dass sie bereits bei niedrigen Temperaturen zu vernetzen beginnen und somit die Diffusionsprozesse der Kontaminationsmaterialien von der Grenzfläche weg behindern und andererseits die Diffusionsrate bei Raumtemperatur sehr gering ist. Entsprechend unbefriedigend sind daher in der Regel die Qualität und Alterungsbeständigkeit der Klebungen von kontaminierten Fügeteiloberflächen bei der Verwendung von zweikomponentigen und anderen bei Raumtemperatur aushärtenden Klebstoffsystemen. Ein weiteres Hemmnis für Diffusionsprozesse ist die thixotrope Einstellung der meisten Klebstoffe.

Es besteht also Bedarf für ein Verfahren zum Kleben von kontaminierten Fügeteilen, das aufwendige Reinigungs- und Oberflächenvorbehandlungsschritte vor dem Auftrag des Klebstoffs auf die Substratoberfläche vermeidet bzw. mit dem sich auch bei nicht vermeidbarer Kontamination oder Rekontamination eine ausreichende Qualität von Klebungen sicherstellen läßt.

Nach dem Stand der Technik wird die Fügeteilvorbehandlung den mechanischen, physikalischen oder chemischen Vorbehandlungsschritten überlassen. Danach erfolgt das Kleben. Erfindungsgemäß ist es neu und wesentlich effektiver, den für die Festigkeit der Klebeverbindung entscheidenden Prozessschritt aber direkt mit dem Klebstoffauftrag zu koppeln und damit auch eine Rekontamination der Fügeteile sicher auszuschließen.

Die erfindungsgemäße Lösung der vorgenannten Aufgabe ist den Patentansprüchen zu entnehmen. Sie besteht im Wesentlichen in der Bereitstellung eines Verfahrens für das Kleben von kontaminierten Fügeteilen, bei dem die kontaminierenden Bestandteile der Fügeteiloberflächen durch Einbringen von Vibrationsenergie/Ultraschall in die noch nicht ausgehärtete Klebstoffmatrix von der Grenzfläche entfernt werden und in der Klebstoffmatrix gelöst oder dispergiert werden und dadurch die Benetzung der Oberfläche verbessert wird.

In einer Ausführungsform des erfindungsgemäßen Verfahrens besteht dieses aus den folgenden wesentlichen Schritten:
a) Aufbringen der Klebstoff-Zusammensetzung auf mindestens eine kontaminierte zufügende Substratoberfläche,
b) Fügen des zweiten ggf. ebenfalls kontaminierten Substratteils auf das mit Klebstoff versehene Bauteil,
c) Einkoppelung der Vibrationsenergie in die noch nicht ausgehärtete Klebefuge,
d) Aushärten des Klebstoffs.

In einer weiteren Ausführungsform wird die Klebstoff-Zusammensetzung unter Einkoppelung der Vibrationsenergie auf eine der kontaminierten Fügeteiloberflächen aufgetragen. In diesem Fall erfolgt die Einkoppelung der Vibrationsenergie dabei über den noch nicht ausgehärteten Klebstoff als Koppelmedium, so dass die dispergierende Energie effektiv an die kontaminierte Substratgrenzfläche gebracht wird, wobei das kontaminierende Material durch diese Vibrationsenergie in die Klebstoffmatrix dispergiert bzw. gelöst und transportiert werden kann.

Prinzipiell kann dabei die Vibrationsenergie in Form von Niederfrequenz-Vibrationen eingebracht werden, besonders bevorzugt ist jedoch die Verwendung von Ultraschallenergie in Frequenzbereich oberhalb des menschlichen Hörbereichs und unterhalb von 10 MHz, insbesondere im Bereich von 20 bis 100 kHz.

Dabei kann die Einkoppelung der Vibrationsenergie durch das Aufsetzen eines Schallkopfes - auch Sonotrode genannt - auf mindestens eines der Fügeteile erfolgen. In einer weiteren Ausführungsform erfolgt der Eintrag der Vibrationsenergie direkt während des Klebstoffauftrags unmittelbar nach dem Klebstoffauftrag auf die Substratoberfläche. Dabei kann der Schallkopf direkt mit der Klebstoffauftragsvorrichtung gekoppelt sein, oder er wird direkt nach der Klebstoffauftragsvorrichtung über den Auftragsbereich geführt. Bei dieser Vorgehensweise erfolgt das Fügen des zweiten Fügeteils auf die Klebstoffoberfläche im Anschluss an Klebstoffauftrag und Einkoppelung der Vibrationsenergie. Dieses Verfahren bietet sich insbesondere in den Fällen an, in denen nur ein Fügeteil maßgeblich kontaminiert ist.

Sowohl bei dem Eintrag der Vibrationsenergie nach dem Fügen der Bauteile als auch bei der Koppelung von Klebstoffauftrag und Eintrag der Vibrationsenergie kann der Schallkopf oder die Kombination aus Schallkopf und Klebstoffauftragsvorrichtung maschinell entlang der Klebefuge geführt werden. Vorzugsweise erfolgt eine derartige maschinelle Führung durch an sich bekannte programmgesteuerte Roboter.

Die Diffusion, Lösung und/oder Dispersion der kontaminierenden Verunreinigungen der Substratoberfläche in der Klebstoffmatrix kann dadurch weiter begünstigt werden, dass der Klebstoff beim Auftragen und / oder beim Eintragen der Vibrationsenergie eine zu Temperatur oberhalb der Umgebungstemperatur aufweist, vorzugsweise kann diese erhöhte Temperatur zwischen 25 °C und 90 °C liegen, besonders bevorzugt zwischen 35 °C und 70°C.

Das erfindungsgemäße Verfahren der Dispersion / Lösung der Kontaminationsprodukte von der Substratoberfläche weg in die Klebstoffmatrix hinein eignet sich insbesondere bei der Verwendung von zweikomponentigen Klebstoffen, die bei Raumtemperatur oder leicht erhöhter Temperatur auszuhärten sind. Sie lässt sich jedoch auch auf andere Klebstoffe, z.B. einkomponentige hitzehärtende, feuchtigkeitshärtende, sauerstoffhärtende oder anaerobe Klebstoffe anwenden. In allen Fällen kann die Wirksamkeit des Abtransports der Kontamination bei hochviskosen Klebstoffen oder bei Schmelzklebstoffen durch die vorgenannte Erwärmung des Klebstoffes beim Auftrag und / oder Eintragen der Vibrationsenergie besonders effektiv gestaltet werden.

Das erfindungsgemäße Verfahren soll nun anhand von Zeichnungen näher erläutert werden: dabei zeigen:
- Figur 1: Die Einkoppelung von Ultraschall oder Vibrationen über eine Sonotrode bei bereits gefügten Bauteilen.
- Figur 2: Eine Ausschnittvergrößerung der Grenzfläche zwischen einem Fügeteil und Klebstoffmatrix
- Figur 3: Die Einkoppelung von Ultraschall - Vibrationen direkt mit dem Klebstoffauftrag auf ein Fügeteil und mit dem Klebstoff als Koppelmedium
- Figur 4: Eine Detailansicht der Grenzfläche zwischen Fügeteiloberfläche und aufgetragener Klebstoffraupe

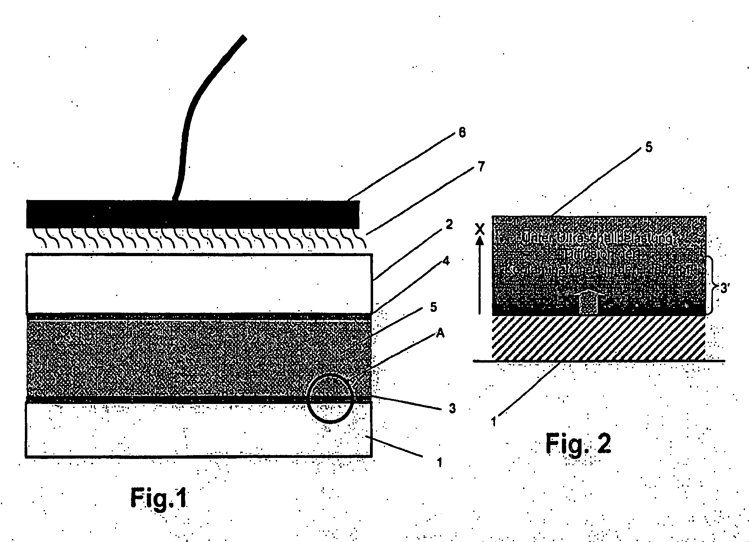

In **Figur 1** ist der Aufbau aus zwei Fügeteilen (1) und (2) mit dazwischen aufgetragenem Klebstoff (5) dargestellt. Die Fügeteilkontaminationsschichten (3) und (4) befinden sich an den Grenzflächen zwischen der Klebstoffmatrix und den Fügeteilen. Der Schallkopf (6), der die Ankoppelung von Vibrationsenergie oder Ultraschallenergie bewirkt, ist über das Koppelmedium (7) direkt mit dem Fügeteil (2) gekoppelt. Im einfachsten Fall erfolgt diese Koppelung durch direktes Aufsetzen auf das Fügeteil, so dass eine spezielle Koppelvorrichtung (7) entfällt und durch den direkten mechanischen Kontakt ersetzt wird.

Wie in der **Figur 2** als Detailvergrößerung des Bereiches A aus Figur 1 dargestellt, wird die Diffusion der Kontaminationen (3') und deren Dispergierung /Lösung in der Klebstoffmatrix durch den Eintrag der Vibrationsenergie bewirkt, wobei die Diffusion in X-Richtung in die Klebstoffmatrix hinein erfolgt, so dass die Konzentration der Kontaminationskomponenten an der Fügeteiloberfläche des Fügeteils (1) nach kurzer Zeit stark abnimmt.

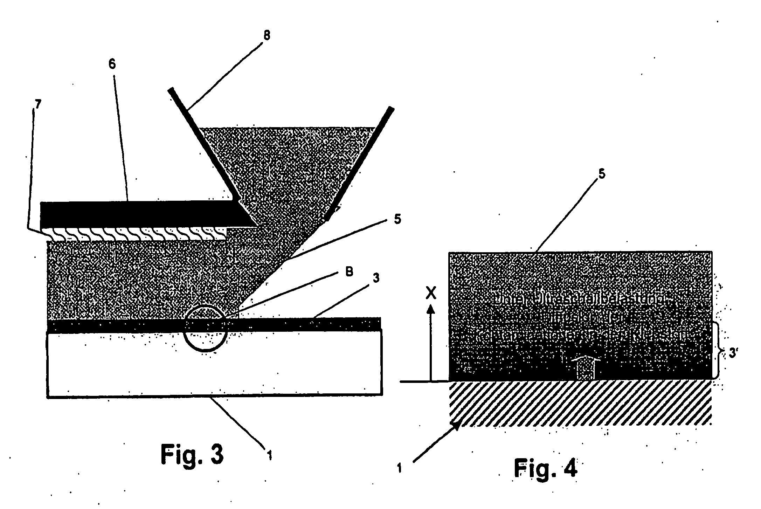

Die **Figur 3** zeigt die Einkoppelung der (Ultraschall)-Vibrationsenergie mit dem Klebstoff als Koppelmedium gleichzeitig mit dem Klebstoffauftrag auf das Fügeteil (1) mit seiner Kontaminationsschicht (3). Die Koppelung des Schallkopfes (Sonotrode) (6) mit der Auftragsvorrichtung (8) für den Klebstoff ist hier nur sehr schematisch dargestellt und zeigt nur das Wirkungsprinzip. Konkrete Ausgestaltungen derartiger Koppelungen von Auftragsvorrichtung und Sonotrode sind für den Fachmann aus dieser Prinzipdarstellung ohne weiteres klar ersichtlich.

Die **Figur 4** zeigt wiederum eine Detailansicht an der Stelle B zwischen Fügeteil (1) mit seiner Kontaminationsschicht (3') und der aufgetragenen Klebstoffraupe (5). Auch hier ist wiederum bildlich der Diffusionsgradient und die Diffusionsrichtung in X-Richtung der Kontaminationsstoffe in die Klebstoffmatrix hinein dargestellt.

In den nachfolgenden Ausführungsbeispielen soll die Erfindung näher erläutert werden, wobei die Auswahl der Beispiele keine Beschränkung des Umfanges des Erfindungsgegenstandes darstellen soll. Sie sollen lediglich in modellhafter Weise einzelne Ausführungsformen und vorteilhafte Wirkungen der Erfindung darstellen.

### Beispiele

### Beispiel 1:

### Kleben von geölten Blechen im Automobilbereich (Fertigung),

Kleben von verschiedenartigen Materialien im Karosseriebau der Automobilindustrie unter Verzicht auf bzw. Minimierung aufwendiger Reinigungsverfahren bei Einsatz von kaltaushärtenden kontaminationstoleranten Klebstoffen (kein Verzug der Bauteile bei kaltaushärtenden Systemen).

Auf die beölten Bleche wird Roboter-geführt automatisch eine Klebraupe (Terokal 4520-34, Fa. Henkel Teroson) per Extrusion aufgebracht. Gekoppelt an die Auftragsdüse erfolgt direkt nach dem Auftragen des Klebstoffes die erfindungsgemäße Vorbehandlung der Klebstoffraupe durch die direkt hinter dem Applikator angebrachte Sonotrode. Die Vorbehandlung der Klebstoff/Fugeteilgrenzflache erfolgt mit typisch 20-100 Watt abhängig von der Geometrie und Dicke der Klebstoffraupe und der Geschwindigkeit des Aufbringens der Klebstoffraupe.
Der beschriebene Vorgang ist bei manueller Ausführung insbesondere für den Reparaturbereich geeignet.
Die Einbringung von Ultraschall kann sowohl in Verbindung mit dem Aufbringen der Klebstoffraupe durch einen Roboter erfolgen (s.o. in einem Arbeitsgang). Ebenfalls ist es aber möglich, nach dem Justieren der beiden Fügeteile, mittels eines Roboters die gesamte Klebeverbindung mit der Sonotrode abzufahren und so Ultraschall einzubringen.

### Beispiel 2:

### Reparaturanwendungen im Automobilbau/Luftfahrttechnik

Im klebtechnischen Reparaturfall von Automobil- oder auch Flugzeugstrukturen erfolgen die Arbeiten unter für die Qualitätssicherung schlechten Randbedingungen (beliebige Werkstätten). Es muss mit kontaminierten und gealterten Kunststoff- und Metalloberflachen gerechnet werden, die sich mittels Reinigungs- und Oberflachenvorbehandlungsverfahren nur bedingt für eine klebtechnische Reparatur vorbereiten lassen. Der Einsatz von kontaminationstoleranten Klebstoffen (warm- oder auch kaltaushärtend) und die Einkoppelung von Ultraschall können helfen auch bei kontaminierten Oberflächen zuverlässige Verklebungen zu erzeugen.

Reparaturverfahren (Beispiel): Großflächige gealterte Laminatoberflächen werden im Bereich des zu reparierenden Schadens mit Lösemitteln (Äthanol, Siedeschnittbenzin) gereinigt. Danach wird die Oberfläche nass z.B. mit Scotchbrite geschliffen, abgespült und getrocknet. Aufwendigere Oberflächenvorbehandlungsverfahren (z.B. Niederdruck-Plasma) sind häufig in der Praxis nicht einsetzbar. Der Schleifprozess ist außerdem auch bereits eine geeignete Vorbehandlung für Verbundwerkstoffe mit Epoxidharzmatrix. Er führt zu Kettenbrüchen des Polymers und reaktiven polaren Oberflächengruppen und einer prinzipiell gut klebbaren Fügeteiloberfläche. Dies gilt aber nur für den Fall einer kontaminationsfreien Oberflächenvorbehandlung. Nicht abschätzbar ist der Einfluss von Fügeteilkontaminationen durch Rückstande und in den Werkstoff eindiffundierte Verunreinigungen. Erfindungsgemäß wird daher der für die Reparatur vorgesehene 2K-Klebstoff (Terokal 5045, Fa. Henkel Teroson) auf das Laminat aufgebracht. Mit einer ca. 20mm Durchmesser Sonotrode wird bei einer Leistung von typisch 20-100 Watt die erfindungsgemäße Vorbehandlung des Fügeteiles und der Klebstoff / Fügeteilgrenzfläche durchgeführt. Die Klebflache wird dazu zeilenförmig / mäanderförmig abgefahren. Der Klebstoff wird als Koppelmedium zur Grenzfläche benutzt. Nach der erfindungsgemäßen Vorbehandlung wird der vorbereitete Reparaturflicken aufgebracht, fixiert und die Klebeverbindung ausgehärtet.

### Beispiel 3:

### Reparatur eingeklebter Kfz-Scheiben

Beim Ersatz von Frontscheiben treten beim Kleben häufig Schäden durch Delaminationen auf. Die Reparaturklebungen werden nicht unter definierten Bedingungen im Rahmen der Fertigung sondern in beliebigen Werkstätten durchgeführt. Ursache für mangelhafte Klebungen sind Kontaminationen auf der Scheibe bzw. der Karosserie. Durch die Anwendung von Ultraschall lässt sich eine bessere Benetzung und dadurch eine qualitativ bessere kontaminationstolerante Scheibenklebungen erreichen.

## Patentansprüche

1. Verfahren zum Kleben von kontaminierten Fügeteilen, **dadurch gekennzeichnet, dass** die haftungsmindernde Kontamination der Fügeteiloberfläche durch Einbringen von Vibrationsenergie in die noch nicht ausgehärtete Klebstoffmatrix von der Grenzfläche entfernt werden und im Klebstoff gelöst oder dispergiert wird.

2. Verfahren nach Anspruch 1, **gekennzeichnet, durch** die folgenden wesentlichen Schritte:
a) Aufbringen einer Klebstoff-Zusammensetzung auf mindestens eine kontaminierte zu fügende Substratoberfläche,
b) Fügen des zweiten ggf. ebenfalls kontaminierten Substratteils auf das mit Klebstoff versehene Bauteil
c) Einkoppelung von Vibrationsenergie in die noch nicht ausgehärtete Klebefuge,
d) Aushärten des Klebstoffs.

3. Verfahren nach Anspruch 1, **dadurch gekennzeichnet, dass** die Klebstoffzusammensetzung unter Einkoppelung von Vibrationsenergie auf eine der kontaminierten Fügeteiloberflächen aufgetragen wird.

4. Verfahren nach mindestens einem der vorhergehenden Ansprüche, **dadurch gekennzeichnet, dass** die Vibrationsenergie Ultraschallenergie ist.

5. Verfahren nach Anspruch 1, 2 und/oder 4, **dadurch gekennzeichnet, dass** die Einkoppelung der Vibrationsenergie durch Aufsetzen eines Schallkopfes (Sonotrode) auf mindestens ein Fügeteil erfolgt.

6. Verfahren nach Anspruch 3, **dadurch gekennzeichnet, dass** der Schallkopf direkt mit der Klebstoffauftragsvorrichtung gekoppelt ist.

7. Verfahren nach mindestens einem der vorhergehenden Ansprüche, **dadurch gekennzeichnet, dass** der Schallkopf oder die Kombination aus Schallkopf und Klebstoffauftragsvorrichtung maschinell entlang der Klebefuge geführt wird.

8. Verfahren nach Anspruch 7, **dadurch gekennzeichnet, dass** die maschinelle Führung durch einen programmgesteuerten Roboter erfolgt.

9. Verfahren nach mindestens einem der vorherigen Ansprüche, **dadurch gekennzeichnet, dass** der Klebstoff beim Auftrag und/oder Eintragen der Vibrationsenergie eine Temperatur oberhalb der Umgebungstemperatur aufweist, vorzugsweise zwischen 25°C und 90°C, besonders bevorzugt zwischen 35 °C und 70 °C.

10. Verfahren nach mindestens einem der vorhergehenden Ansprüche, **dadurch gekennzeichnet, dass** der verwendete Klebstoff ein zweikomponentiger bei Raumtemperatur oder mit Wärmeunterstützung härtender Klebstoff ist.

11. Verfahren nach mindestens einem der vorhergehenden Ansprüche, **dadurch gekennzeichnet, dass** der verwendete Klebstoff ein einkomponentiger Klebstoff ist.

## Claims

1. A process for bonding contaminated substrates, **characterized in that** the adhesion-reducing contamination of the substrate surface is removed from the interface and dissolved or dispersed in the adhesive by the introduction of vibration energy into the uncured adhesive matrix.

2. A process as claimed in claim 1, **characterized by** the following key steps:
a) applying an adhesive composition to at least one contaminated substrate surface to be joined,
b) applying the second, possibly likewise contaminated substrate to the adhesive-coated substrate,
c) introducing vibration energy into the uncured bonded joint,
d) curing the adhesive.

3. A process as claimed in claim 1, **characterized in that** the adhesive composition is applied to one of the contaminated substrate surfaces while vibration energy is introduced.

4. A process as claimed in at least one of the preceding claims, **characterized in that** the vibration energy is ultrasound energy.

5. A process as claimed in claims 1, 2 and/or 4, **characterized in that** the vibration energy is introduced by fitting a sound head (sonotrode) to at least one substrate.

6. A process as claimed in claim 3, **characterized in that** the sound head is directly coupled with the adhesive applicator.

7. A process as claimed in at least one of the preceding claims, **characterized in that** the sound head or the combination of sound head and adhesive applicator is guided by machine along the bonded joint.

8. A process as claimed in claim 7, **characterized in that** the machine guiding function is performed by a program-controlled robot.

9. A process as claimed in at least one of the preceding claims, **characterized in that**, during its application and/or during the introduction of the vibration energy, the adhesive has a temperature above the ambient temperature, preferably in the range from 25°C to 90°C and more particularly in the range from 35°C to 70°C.

10. A process as claimed in at least one of the preceding claims, **characterized in that** the adhesive used is a two-component adhesive which cures at room temperature or with the aid of heat.

11. A process as claimed in at least one of the preceding claims, **characterized in that** the adhesive used is a one-component adhesive.

## Revendications

1. Procédé pour le collage de pièces contaminées à assembler, **caractérisé en ce que** la contamination, diminuant l'adhérence, des surfaces des pièces à assembler est éliminée de l'interface par introduction d'une énergie vibratoire dans la matrice de l'adhésif qui n'a pas encore été durcie et est dissoute ou mise en dispersion dans l'adhésif.

2. Procédé selon la revendication 1, **caractérisé par** les étapes essentielles suivantes :
a) l'application d'une composition d'adhésif sur au moins une surface de substrat contaminé qui doit être assemblée ;
b) l'assemblage de la deuxième partie de substrat, le cas échéant également contaminée, sur le composant muni de l'adhésif ;
c) l'introduction par couplage d'une énergie vibratoire dans les joints collés qui n'ont pas encore été durcis ;
d) le durcissement de l'adhésif.

3. Procédé selon la revendication 1, **caractérisé en ce que** la composition d'adhésif est appliquée sur une des surfaces contaminées des pièces à assembler via une introduction d'énergie vibratoire par couplage.

4. Procédé selon au moins une des revendications précédentes, **caractérisé en ce que** l'énergie vibratoire est une énergie ultrasonore.

5. Procédé selon les revendications 1, 2 et/ou 4, **caractérisé en ce que** l'introduction de l'énergie vibratoire par couplage a lieu par l'application d'une sonde acoustique (sonotrode) sur au moins une pièce à assembler.

6. Procédé selon la revendication 3, **caractérisé en ce que** la sonde acoustique est couplée directement au dispositif d'application de l'adhésif.

7. Procédé selon au moins une des revendications précédentes, **caractérisé en ce que** la sonde acoustique ou la combinaison de la sonde acoustique et du dispositif d'application de l'adhésif est soumise à un guidage mécanique le long du joint de collage.

8. Procédé selon la revendication 7, **caractérisé en ce que** le guidage mécanique a lieu via un robot commandé par un programme.

9. Procédé selon au moins une des revendications précédentes, **caractérisé en ce que** l'adhésif, lors de l'application et/ou de l'incorporation de l'énergie vibratoire, présente une température supérieure à la température ambiante, de préférence entre 25 °C et 90 °C, de manière particulièrement préférée entre 35 °C et 70 °C.

10. Procédé selon au moins une des revendications précédentes, **caractérisé en ce que** l'adhésif utilisé est un adhésif à deux composants durcissant à la température ambiante ou durcissant avec un apport de chaleur.

11. Procédé selon au moins une des revendications précédentes, **caractérisé en ce que** l'adhésif utilisé est un adhésif à un seul composant.
